# EUROPEAN PATENT SPECIFICATION

(11) **EP 4 067 565 B1**
(45) Date of publication and mention of the grant of the patent: **17.09.2025**
(21) Application number: 21382259.6
(22) Date of filing: 30.03.2021
(51) Int. Cl.: D06M 10/00, D06P 5/20, B23K 26/0622, B23K 26/352, D06B 11/00, D06C 23/02

(54) **METHOD AND SYSTEM FOR MARKING A GRAPHIC ON A TEXTILE WITH LASER RADIATION**
VERFAHREN UND SYSTEM ZUR MARKIERUNG EINER GRAFIK AUF EINER TEXTILIE MIT LASERSTRAHLUNG
PROCÉDÉ ET SYSTÈME DE MARQUAGE D'UN GRAPHIQUE SUR UN TEXTILE AVEC UN RAYONNEMENT LASER

(43) Date of publication of application: 05.10.2022
(73) Proprietor: Jeanología, S.L., 46980 Paterna, Valencia (ES)
(72) Inventor: SANS PERARNAU, Albert, 08192 Sant Quirze del Vallès, Barcelona (ES); SANS RAVELLAT, Ramon, 08192 Sant Quirze del Vallès, Barcelona (ES)
(74) Representative: González Poveda, Sara

(56) References cited:
- EP-A1- 3 730 686
- WO-A1-2020/025771
- US-A- 5 567 207
- US-A1- 2015 225 890
- US-A1- 2016 263 928

## Description

### Technical Field

The present invention relates to the technical sector of marking textiles, meaning marking graphics on textiles, using laser radiation. Particularly, the invention in its preferable form describes methods and systems using laser radiation for forming drawings or patterns, for example wear patterns, on a surface of the textile, wherein forming the patterns or drawings may comprise discoloring said surface, and/or removing material from said surface, and/or drilling a hole on said surface, without though destroying or burning the entire textile due to marking parts of it with said laser radiation. The textile can be a fabric, or a yarn, or a thread, or preferably be an article of clothing or apparel, and most preferably comprise denim fabric or indigo colored dyed yarn.

The textile optionally and preferably is any of a fabric, an apparel, an article of clothing. A non-limiting list of articles of clothing that can be the textile includes: a pair of trousers, a jacket, a t-shirt, a shirt, a blouse. The fabric may optionally be part of footwear or of a household item such as for example of a curtain. Optionally and preferably the textile is, or comprises, a denim fabric. Optionally and preferably the textile is colored, and optionally the color of the textile or any part therein is indigo. Therefore, the textile may optionally comprise an indigo dyed yarn, that optionally is ring dyed. The textile and any parts therein may have any other color. The textile may comprise yarns containing any type of natural or synthetic fiber, and preferably containing natural fibers, such as for example wool fibers, or cotton fibers, or silk fibers, or animal yarn fibers or combinations thereof. The fibers may additionally comprise a polymer.

In the context of the present invention, marking the textile may comprise altering the color of the textile and/or marking graphics and/or indicia, such as for example letters, numbers, drawings, wear patterns or combinations thereof, on the surface the textile. Marking may preferably be or comprise scribing and/or engraving and/or ripping the textile. An expert should understand that marking occurs where the laser radiation impinges the textile e.g. on the parts of the textile' surface that are irradiated by said laser radiation.

### Prior art

Using laser radiation for marking textiles is known since at least 30 years ago. Patent document with publication number US5567207A published in 1990 describes a process whereby the surface of a textile fabric is irradiated with laser to form a pattern, by raising with said laser the temperature at selected places on the fabric. Likewise, US 2010/0176101 A1 describes laser scribing methods and systems in which a laser output is applied to the textile material, and describes that for improving the speed of the scribing process a high power laser is needed. Similarly, US7318377B2 published in 2005 describes scribing graphics on fabrics. The aforementioned US 2010/0176101A1 and US7318377B2 patent documents, similar to the common practice in the prior art regarding laser scribing methods and systems in which a laser output is applied to the textile material, describe explicitly producing the laser radiation needed using CO₂ gas lasers. The use of CO₂ lasers is considered a standard in the sector. CO₂ gas lasers are generally capable of producing laser radiation of very high optical power such as 5000 W, as described in US 2010/0176101 A1, and such very high optical powers and the CO₂ lasers producing them are considered in the previous art to be requirements for high speed marking of pattern on the textile, e.g. for marking wear patterns on a denim fabric by removing the dye (e.g. an indigo dye) that colors the fabric. Likewise, the CO₂ gas lasers produce long-wavelength laser radiation of a wavelength of 10.3 micrometers, as for example is described in the aforementioned US 2010/0176101 A1, and this has contributed to the widespread use of the CO₂ lasers in the textile laser marking sector because long wavelength radiation can be absorbed by both the core material of the textile's fibers, e.g. by wool or cotton, and also by the colorant/dye that potentially covers or is absorbed in or on the fibers.

Document US 2015/225890 A1 discloses a method and a system for making, by a laser etching, a partially metallized single thread fabric material for aesthetic or marking applications, wherein the method comprises a pre-metallizing step or a partial metallizing on the fabric and a following metal removal step, being performed by a quick and localized evaporation thereof, performed either on one or both the surfaces simultaneously, by a specifically designed laser. Document US 2016/263928 A1 describes a method of generating a pattern image used to form a pattern on a surface of a fabric using laser irradiation. The method involves inputting a plurality of parameters associated with laser irradiation units into a user interface, and viewing laser irradiation units arranged in the pattern area of the user interface based on computer processing of the inputted plurality of parameters, the laser irradiation units collectively establishing the pattern image for viewing.

Document EP3730686 A1 discloses a mannequin for supporting a pair of trousers whereon a laser marking is performed, comprising two leg structures to be housed on the inside of the trouser legs.

Document WO 2020/025771 A1 describes a laser method and apparatus for forming a pattern on a workpiece. In particular, the described method relates to the workpiece finishing, e.g. fabrics and garments, by use of a laser, in order to obtain a desired finishing or appearance pattern such as for example a faded, or worn finish look effect, or to reproduce an image from a graphic file, for example to replicate on the workpiece an image or a printed pattern, wherein the pattern may be configured as a greyscale matrix.

The long-wavelength infrared radiation that is produced by a CO₂ laser may be directed towards a surface of a textile; there, the radiation may be absorbed by and heat the textile's fibers and any dyes that are absorbed on said fibers, and the radiation may discolor and/or bleach and ablate said dyes and fibers, thusly marking the textile. The CO₂ laser radiation can indeed be very effective, destructive and non-selective related to its effects on the textile's fibers; this inhibits the ability to finely tune the laser radiation for finely tuning the amount and type of material to be bleached or ablated from the textile material, and consequently limits the ability to finely tune and improve the contrast and color of the scribed graphics and of the pixels in the graphics. For example, laser radiation produced by a standard CO₂ is absorbed by and heats relatively slowly the entire volume of the textile's fiber that receives said radiation, and consequently said radiation may discolor or darken (e.g. render brown) the core of the fabrics; this can be a problem. For example, when a yarn of the fabric comprises a white cotton core and an indigo dyed surface, and it is desired that the lazed fabric be whitened by removing only the dyed surface and not darkening the white core, the use of CO₂ lasers may cause problems. Consequently, the graphics scribed on the textiles using standard CO₂ lasers are often considered to be "flat" and suffer from an inability to improve the "whiteness" of the scribed fabric when such whiteness is required e.g. when marking wear patterns on denims. This is a known problem and various solutions have been described in the prior art. For example, US 2019/0177895 A1 published in 2019 describes a method of creating a laser abrasion pattern on a computer, wherein the method comprises modifying the pattern to create a darker and more heavily lazed sections of the pattern; and feathering an abrasion intensity from darker sections to lower intensity sections. Also, patent document EP 3346038 A1 published in 2018, describes that for avoiding that the laser scribed graphics appear "flat", the graphic needs to comprise at least two areas, and the power of the laser when scribing each of said areas needs to be modulated using a power change gradient that is different for each of said at least two areas. Therefore, the solutions proposed in the prior art for avoiding that the scribed graphics appear as "flat", are complex and increase the financial cost of, and the energy required for, the scribing.

Moreover, the inventors have observed that previously known systems for marking grayscale graphics and comprising YAG lasers or gas lasers, such as standard CO₂ lasers, cannot mark on work pieces at high speeds high quality grayscale graphics. At high marking speeds and high resolution marking, i.e. when marking at a high speed a large number of different color pixels per unit length, the previously known systems fail in the sense that the marked graphic has usually defects and "dead" regions. In these dead regions the graphic that is marked on the work-piece does not have the required color. Even worst, often the contrast within the aforementioned dead regions is poor, and this gives the impression that the laser was "frozen" when the laser beam was scanning over these regions. This is a problem that the present invention solves.

In view of the above it is evident that the use of standard CO₂ lasers, which are considered to be classic yet bulky and problematic, is accompanied by an inability to finely tune in a simple, cost-effective and energy efficient manner the contrast, colors and quality of the final images/graphics which are marked and appear on the textiles. Therefore, a solution is needed to the problem of how to achieve scribing graphics that are not flat, and achieve this in a manner that does not add cost and complexity compared to previously known methods and systems, and achieve reducing said cost and complexity.

### Description of the Invention

An object of the present invention is to provide a system according to claim 6 and a method according to claim 1 to solve the problem of how to do high quality and high resolution laser marking on textiles, avoiding the formation of dead regions on the marked surface of the textile. Therefore, the present invention solves the problem of how to mark graphics at high speeds and without defects or dead regions, even when marking a grayscale graphic that comprises a high number of pixels per unit length, where the pixel color or pixel value (e.g. grayscale value) changes significantly from one pixel to the next one.

Considering the above, the present invention, in each and all of its aspects, solves the problem of how to, using laser radiation, scribe on textiles graphics that are not flat, and improve the whiteness of the lased and thusly marked textile, and do the aforementioned in a manner that reduces the cost and complexity compared to the prior art.

The invention in its first aspect concerns the use of a laser system for marking textiles as defined in claim 6, that has a rise time of 35 µs or less, and/or has a fall time of 35 µs of less, for marking a textile. Said laser that has the aforementioned 35 µs rise and/or fall time, herein is called fast laser. Preferably, said fast laser is a fiber laser. Optionally and preferably the fast laser has a rise time of 25 µs or less, and/or has a fall time of 25 µs of less. Advantageously a rise/fall time of 25 us or less may further contribute to optimizing the technical effects achievable.

The inventors of the present invention found that when a laser of the aforementioned rise time and/or fall time is used instead of a non-fast CO₂ laser or any other of the lasers used and described in the prior art concerning laser marking textiles, then the contrast and/or whiteness within the graphics marked on the textile, is/are tremendously improved compared to what is achieved when using non-fast classic lasers such as CO₂ lasers. Likewise, as is described further below, the contrast and resolution achieved using the fast laser can be superior compared to the contrast and resolution of the pattern produced by the previously known and widely used types of non-fast lasers.

Moreover, the inventors found that said improvement in the quality of the laser marked patterns/images/indicia, is accompanied by a significant reduction of the energy required for laser marking the textile, and a reduction of the complexity of the laser marking process. A CO₂ laser that is capable of emitting 600 W (watts) of optical power may typically consume 7500 watts of electrical entry; therefore the power conversion efficiency of said CO₂ laser is about 8%. When taking into account also the electrical energy that is required for cooling said CO₂ laser, then typically the power conversion efficiency of the laser system that comprises the CO₂ laser and the cooling system used for cooling the laser, may be about 4.5%.

In contrast, the inventors found that when using a fast laser, particularly a fiber laser, the laser radiation for marking the textile can be produced at a power conversion efficiency of more than 30%. Likewise, the use of the fast laser can reduce the time required for laser marking. Likewise, the inventors found that advantageously the use of a fast fiber laser improves the robustness of the laser marking process compared to previously known methods, noticing that it is easier to repeat the marking process with good and accurate reproducibility.

The invention in its second aspect is a method for marking a textile as defined in claim 1, i.e. a method for marking a textile using laser radiation, said method comprising using a fast laser to produce the laser radiation, the method comprising :
- using a laser for producing a laser radiation;
- controllably, according to control information related to a graphic, directing and moving the laser radiation such that the latter impinges on a textile,
characterized in that the laser has a rise time of 35 µs or less, and/or a fall time of 35 µs or less.

Optionally and preferably the laser has a rise time of 25 µs or less, and/or has a fall time of 25 µs of less.

Further preferably, the laser is configured for changing a power or intensity of the laser radiation. Likewise, further preferably, the method also comprises controllably, according to the control information, changing the power or intensity of the laser radiation. Preferably changing the radiation's power or intensity comprises controlling the laser such that the laser changes, i.e. effectuates (causes) the change of, the energy or intensity of the laser radiation. Optionally and most preferably the laser is a fiber laser. Moving the laser radiation may be moving the laser radiation relative to the textile. Particularly, moving the laser radiation may be scanning the textile with the laser radiation, e.g. the laser radiation scans (passes over) a surface of the textile.

The laser radiation may be considered as an optical output, e.g. a laser beam, produced, i.e. generated, by the laser.

In an embodiment the method comprises changing according to the control information a laser radiation's power or power density, and/or changing a speed at which the laser radiation is being moved. Advantageously these options allow for scribing complex graphics wherein color or tone varies from pixel to pixel or across scribed lines. Similarly to what is mentioned further below regarding the system of the invention, optionally in the method the graphic comprises graphic elements that are pixels or vectors, and for each of said graphic elements the control information respectively comprises a corresponding graphic element value. The aforementioned speed may be the speed with/at which the laser radiation scans a surface of the textile.

Preferably. the laser radiation comprises laser pulses of duration of between 1 ns and 1 ms. The laser radiation may optionally be of a wavelength of between 300 nm to 2000 nm, more preferably of between 400 and 800 nm. The textile may be a denim fabric. Preferably, the textile is indigo colored. The inventors have found that fast lasers producing laser radiation of the aforementioned wavelength, particularly laser producing green laser light, are exceptionally good for marking graphics on denims, and said lasers are particularly good for causing discoloration of indigo colored textiles.

The method comprises: generating a seed optical pulse using a first light source, preferably a first laser, that is coupled to a first optical fiber; passing said seed optical pulse to a doped optical fiber that acts as an active gain medium and is coupled to two fiber Bragg gratings; pumping the active gain medium with pump radiation produced by a second laser source coupled via a second optical fiber to the first optical fiber and/or to the doped optical fiber. This way laser generation can be achieved in a compact system and in reliable and way, thusly making the entire method more reliable and easier to implement.

Preferably, the method comprises shaping the laser radiation into a laser beam that has a beam spot diameter of from 400 to 2000 µm, preferably of from 800 to 1500 µm. The laser beam may be used for marking the graphic. Advantageously shaping the laser radiation contributes to optimizing the laser spot on the textile, and therefore allows for optimizing the quality of the marked graphic.

In the method, optionally the aforementioned beam spot diameter is at distance of more than 1 m, preferably at 1.9 m, from the laser. Likewise, in an embodiment the laser beam is being moved on a surface of the textile, across a distance of 1.8 m or less, preferably of between 0.1 m and 1.8 m. Marking across the aforementioned large distances and areas is very advantageous when the surface of the textile to be marked is large, e.g. when said surface is a side of garment such of a pair of jeans.

An alternative embodiment of the invention in its second aspect is a method for marking a textile (using laser radiation), the method comprising:
- producing a laser radiation using a fast laser;
- controlling the laser radiation to modulate it and/or direct it to impinge on the textile.

Marking is produced where the laser radiation impinges on the textile. The radiation upon impinging on the textile may be absorbed, at least partially, by the textile, thusly bleaching or ablating the textile or parts thereof. Marking happens at the irradiated points of the textile.

The fast laser may preferably be any kind of known fiber lasers, but more preferably may be a q-switched fiber laser or a mode-locked fiber laser. Both of the aforementioned types of fiber lasers are robust and in principle can be configured to be controllable for precisely modulating the laser radiation produced by them. Likewise, the fast laser, and for example the aforementioned fiber laser types, can optionally offer pulsed laser (radiation) of high frequency i.e. laser radiation comprising laser pulses of duration of less than about 1000 µs (microseconds), and preferably of less than about 500 µs, and most preferably of between 300 fs (femtoseconds) and 100 µs, or of between 300 fs and 1 µs, or of between 1 ns (nanosecond) and 1 µs. The fast laser is preferably a pulsed laser i.e. it produces pulsed laser (i.e. radiation comprising radiation pulses). In the latter case the frequency of the pulse repetition is optionally between 10 kHz and 100 THz (terahertz), or of between 1000 kHz and 3.3 THz, or of between 1000 MHz and 100 THz, for attempting controlling and optimizing: the part/depth of the textile yarns heated and/or ablated by the radiation, the pulse energy, and the speed and quality of the laser marking achieved when said pulses impinge on the textile. Therefore, it is contemplated that in the method of the second aspect of the invention, optionally the laser radiation is pulsed laser radiation having a frequency, and modulating the laser radiation comprises changing said frequency. Nevertheless, it is also contemplated that the fast laser may produce continuous-wave (CW) laser or radiation resembling continuous wave radiation.

The fast laser is optionally a CO₂ laser which has a rise time of 35 µs or less and/or has a fall time of 35 µs or less. Such a CO₂ laser having the aforementioned rise time and/or fall time of 35 µs or less is not a standard (classic) CO₂ laser. Instead, it is considered as being a fast CO₂ laser. Likewise, the fast laser is optionally and preferably an all-fiber fiber laser e.g. a laser that does not comprise free space optics. A fiber laser is a laser in which the active gain medium is an optical fiber and preferably is an optical fiber doped with rare-earth elements such as for example, erbium, ytterbium, neodymium, dysprosium, praseodymium, thulium and holmium. Therefore, the present invention in a further aspect concerns the use of a doped optical fiber as an optical gain medium for producing laser for marking textiles with laser radiation. Likewise, in the second aspect of the invention, it is contemplated that optionally producing laser radiation comprises using a doped optical fiber as an active gain medium. Such an all-fiber fiber laser can optionally be produced by splicing together different types of optical fibers and coupling these, or some of them, directly on various solid state light sources and/or other solid state components such as a SESAM (semiconductor saturable absorber mirror), and/or light emitting diode (LED) optical sources used for proving seed optical pulses and/or optical radiation that are used for pumping the optical fiber that is the active gain medium, and/or solid state optical fiber multiplexing (WDM) system. There may be more than one optical sources (e.g, LEDs) which may provide radiation that may be used for optical pumping of the gain medium, so that a significant power amplification can be achieved in cases where it is required to have a high laser power, e.g. a laser that has a power output of more than 10 W, or of more than 100 W, or of more than 1000 W, or higher. It is possible to use a fiber laser that has a laser power of between 10 W and 1000 W, or of between 100 W and 1000 W.

Obviously, in view of the above it is preferable that the laser radiation is controlled, for thusly controlling its interaction with the textile and ensuring that the radiation hits/impinges on the surface of the textile. Therefore, controlling the laser radiation may preferably comprise any of:
- modulating the laser radiation;
- directing the laser radiation to impinge (impinge on), i.e. to hit/irradiate, (the surface of) the textile.

Therefore it is contemplated that optionally the laser radiation comprises or is a laser beam, and controlling the laser radiation may comprise any of: changing the spot size or form of the laser beam, focusing or defocusing of the laser beam, scattering the laser radiation, diffracting the laser radiation, deflecting the laser radiation, coupling the laser radiation into an optical fiber, reflecting the laser radiation, passing the laser radiation through free space, passing the laser radiation though an optical filter, and combinations thereof.

In order to optimally adjust and control the radiation-textile interaction and for example control the extend of the effect imposed by the radiation on the areas of the textile that receives said radiation, it is preferable to control the energy, or power density and the like of said radiation received by the textile. Therefore, optionally in the method according to the second aspect of the invention controlling the laser radiation comprises changing a power and/or a power density and/or a wavelength of the laser radiation. Similarly, and for the same reason, in the aforementioned method of the second aspect of the invention, optionally and preferably, the laser radiation comprises pulses of radiation, and controlling the laser radiation comprises any of:
- changing the duration and/or power and/or wavelength of the pulses or parts thereof;
- changing the duration between successive pulses;
- changing the repetition rate.

Directing the laser radiation to impinge on the textile may entail controlling and changing the relative position of the laser radiation with respect to the surface of the textile material, and consequently may optionally entail moving the textile material with respect to the laser radiation e.g. with respect to a laser beam produced by the fast laser. Therefore, optionally, the method according to the second aspect of the invention may optionally comprise any of the following and combinations thereof:
- placing the textile material on a stage;
- moving said stage relative to the laser radiation directed to the textile material;

It is contemplated the optional case wherein the method according to the second aspect of the invention also comprises: moving the fast laser and preferably a laser head of the fast laser across a plane using a plotter system attached to said fast laser or the fast laser's head and configured to move the latter. These plotter systems are often called X/Y systems because they can provide motion across the X and Y axes of a plane. The laser head is usually considered to be the part of the laser from which the produced laser radiation exits the laser. Preferably, when a system plotter is used, the textile (e.g. a textile fabric) is fixed e.g. is fixed on a stage or on a mannequin.

When marking the textile, it is often required to mark on the textile's surface patterns that comprise different areas of different color or of different degree of abrasion or discoloration induced on the textile by the laser radiation. With the present invention, the color or discoloration or degree of abrasion on a textile's surface part irradiated by said laser radiation may be controlled by modulating the duration/time of irradiating said part. In practice, the pattern that is laser marked on the textile in most of the cases is represented by an image, such as for example a digital image, that comprises pixels. Each of said pixels may have a corresponding value which is associated with a color or degree of abrasion. The pattern of the image may be marked on the surface on the textile, and there each pixel of the pattern may have its own corresponding area. The degree of abrasion can optionally be zero e.g. there may optionally be pixels with corresponding areas that must not be irradiated with laser radiation or must be irradiated with irradiation of sufficiently low power and/or energy. Likewise, there may be pixels and corresponding areas for which the laser irradiation and/or power and/or intensity and/or energy must be high. In view of the above, in the method according to the second aspect of the invention optionally and preferably marking a textile (a textile material) is marking a pattern on the textile, the pattern comprising pixels, each pixel having a (i.e. its own) corresponding area on the surface of the textile material, and wherein controlling the laser radiation comprises any of the following and combinations thereof: with the laser radiation impinging on different of said corresponding areas; changing a power or power density of the laser radiation when or while the laser radiation impinges on different of said corresponding areas; and/or, changing a power and/or intensity and/or energy of the laser radiation when or while the laser radiation impinges on different of said corresponding areas.

Likewise, it is contemplated that in the method of the second aspect of the invention, optionally and preferably, marking a textile (material) is marking a pattern on the textile, the pattern comprising pixels, each pixel being associated with a corresponding marking value, the marking value being any of a whiteness value, a color-scale value, a grayscale value, a binary scale value, a rip value, a laser ON value, a laser OFF value, and wherein controlling the laser radiation to impinge on the textile material, or any part thereof, is executed according to the corresponding marking value. Any of a whiteness value, or color-scale or grayscale values can optionally be from 0 to 255 or from 0 to 100 or from 0 to more than 255. The color-scale may refer to a blue color, a red color, a green color or any color with RGB primaries, or a color belonging to the CIELAB color space or the like. A laser ON value can be associated with having the fast laser switched on and/or permitting laser radiation to exit from the laser head and/or heat the textile. A laser OFF value may be associated with having the fast laser switched off and/or not permitting laser radiation to exit from the laser head and/or heat the textile. A rip value may be associated with controlling the laser radiation to cut through (rip) or not cut through the part/area of the textile material being irradiated.

The laser radiation is preferably set as to not be long-wavelength infrared light so that that the laser radiation may be primarily absorbed by the surface of the fibers of the textile, and particularly by any colorants/dyes being there. Similarly, it is desirable to avoid or inhibit the absorption of said laser radiation by the core of the fibers of the textile. The inventors found that the aforementioned, i.e. configuring the radiation to be primarily absorbed on the surface of the yarn on the textile's surface, can be achieved in the optional case where the laser radiation has a wavelength of between 300 nm and 2000 nm, and preferably of between 300 nm to 1100 nm, and most preferably of between 400 and 700 nm, and even most preferably of between 500 nm and 700 nm. In particular, advantageously when the laser radiation is less than 1100 nm or less than 1000 nm, and especially when the wavelength is of between 500 nm and 700 nm, the optical absorption on the surface of the textile's fabrics is maximized, and the whiteness and overall color and resolution of the marking process is exceptional compared to the results achieved using the teachings of the prior art. The above is particularly evident in the cases where the textile is indigo colored. The inventor observed that indigo dyes absorb very strongly light of wavelengths of less than 1000 nm and especially of between 400 nm and 700 nm. Specifically, the inventor observed that the per cent (%) optical absorption by the indigo dyes is more than 7 times larger when the wavelength of the radiation is of between 400-700 nm compared to what is when the wavelength is of more than 1000 nm. Accordingly, in a method according to the second aspect of the invention, it is contemplated having any of the following optional and preferable elements and combinations thereof: the textile is denim fabric; and/or, the textile comprises a ring dyed yarn; and/or the textile is indigo colored.

The inventor observed that in the above three optional cases, and for example when the textile is ring dyed and therefore the dye is mostly located close to the surface and away from the core of the yarn, then advantageously the laser radiation is selectively absorbed on said surface and consequently the color of the yarn's core (which in many cases is white) is not affected by the irradiation process, thusly advantageously resulting to good whiteness values, and also thusly advantageously achieving high marking speed.

The method of the second aspect of the invention can be preferably applied as a finishing method at the last stages of the production of articles of clothing. The article of clothing when processed may be preferably placed, i.e. be worn on, on an artificial mannequin, such as a tailor dummy, so that the surface to be processed by the laser radiation is not wrinkled. Likewise, placing the article of clothing (apparel) on a mannequin may expose all the parts of the apparel's surface than need to be processed. Hence, in the method of the second aspect of the invention optionally and preferably the textile is an article of clothing, preferably a pair of denim trousers, and the method comprises mounting the article of clothing on a suitably shaped mannequin, and preferably the method comprises moving the mannequin.

As is known the fast laser for producing laser radiation requires to be supplied with electrical power. The fast laser produces laser radiation that has an optical power. The power conversion efficiency PCE of the laser is: PCE=100*(%)*(optical power of laser irradiation produced by the fiber)/(electrical power supplied to the fiber laser for producing laser radiation).

Said power conversion efficiency can also be called electrical to optical power conversion efficiency. For the calculated PCE, preferably there should not be taken into account any energy that may be consumed, e.g. by an optional cooling system, for cooling the laser.

The higher the power conversion efficiency is, the more economic and ecologic is the method of the second aspect of the invention. Therefore, in the method of the second aspect of the invention optionally and preferably the laser radiation is produced using the fast laser, and producing the laser radiation may comprise consuming electrical power at an electrical to optical power conversion efficiency of more than 15%, preferably of more than 30%, more preferably of more than 35 %. This is a tremendous improvement compared to the existing methods in the sector where the power conversion efficiency when using CO₂ lasers for processing textiles is typically much less than 20% and often is less than 10%. The preferable use of a fast fiber laser further advantageously allows for this improvement.

The exact type of the fiber laser used, and consequently the exact steps used during producing the laser radiation, may change. Nevertheless, it is beneficial if the fast laser type and laser radiation production steps are selected so that the laser radiation is produced robustly and in a way that allows good reproducibility and in a cost effective manner. For this reason, in the second aspect of the invention, producing the laser radiation comprises: generating a seed pulse, using a first laser source, that preferably is a laser diode, that is coupled to a first optical fiber; passing said seed pulse to a doped optical fiber that acts as an active gain medium and is coupled to two fiber Bragg gratings (FBG); pumping the active gain medium with pump radiation produced by a second laser source coupled via a second optical fiber to the first optical fiber and/or to the doped optical fiber.

The first optical fiber is coupled to one of the fiber Bragg gratings or to the first optical fiber.

A third aspect of the invention, as defined in claim 6, concerns a system (i.e. an apparatus/device) that is configured for allowing executing the method of the second aspect of the invention. Therefore, the invention in its third aspect is a system for marking a graphic on a textile. Therefore, the system is suitable for marking on a textile (material) using laser radiation. The system comprises a fast laser. The fast laser is a fiber laser as described further above. The fast laser is suitable for producing the laser radiation.

According to the above, an exemplary embodiment of the third aspect of the invention is a system for marking a graphic on a textile, the system comprising: a laser for producing a laser radiation; moving means configured for moving and directing the laser radiation such that the latter impinges on a textile, control means configured for controlling the moving means according to control information related to a graphic; the system being characterized in that the laser has a rise time of 35 µs (microseconds) or less, and/or a fall time of 35 µs or less. Optionally and preferably said laser is a fiber laser.

The laser radiation may be a laser beam or laser output. The moving means may comprise movable mirrors that may direct and scan the laser radiation (beam) over the surface of a textile. The control means, which in one embodiment is a controller, may control the laser and/or the moving means and/or other optional additional component of the system. Therefore, in an embodiment the control means comprise a controller which is configured to process the control information. An optional additional component may be a laser beam modulator configured for changing the beam size and/or intensity of the laser radiation. There are known controllers for laser marking systems according to control information related to a graphic. The control information may comprise position or coordinates of elements of the graphic, such as pixels, and/or may comprise pixel values such as pixel color values. The graphic may be a grayscale graphic. Likewise, marking may be grayscale marking. Accordingly, a color pixel values may be in the grayscale e.g. in a value range from 0 to 255. The control means may be configured to adjust the laser and/or any optional component of the system such that the intensity or energy of the laser radiation changes and varies during marking. Likewise, the control means may control the moving means such that the speed at which they move the laser radiation changes and/or varies during marking. The controller may be connected to a computer system.

The inventors found that when the laser has a fall time of 35 µs or less, and/or the laser has a fall time of 35 µs or less, surprisingly there are no dead zones observed on the graphic on marked textile surface, even when marking the graphic at high speeds. This solves the problem of the "dead" region formation when marking high quality and high resolution graphics at high speeds. The inventors believe that the invention solves the problem because when control information dictates changing rapidly the laser intensity or energy when the laser beam moves quickly from one pixel to the next one, or from changing vector elements, the fast laser's intensity or energy does change rapidly according to the control information, thanks to the laser's short rise and short times which permit the intensity or energy changes to be as fast as required. The inventors believe that in the absence of such fast rise and/or fall times, it takes a long time for the laser energy to change from one level to another when moving from one pixel to the next one, and consequently the beam moves from one pixel to the next one before the intensity or energy has changed to the desired level; this is what causes the dead zones. The fiber laser of the present invention is fast enough to avoid the dead zone formation problem, thereby allowing marking of high quality graphics, even when the speed is high. The rise and fall times of lasers are well defined and known properties in the art. The rise and fall times are commonly measured/defined according to ISO 11554:2017 standard (ISO 11554:2017(en) Optics and photonics - Lasers and laser-related equipment- Test methods for laser beam power, energy and temporal characteristics). Most preferably each of the rise time and/or fall time of the laser in the present invention is defined and/or measured according to ISO 11554:2017. According to section 8.2. of ISO 11554:2017, and related to the variation of radiation power of a laser pulse with time, as is commonly known in the art, the rise time is the time interval between two points of time at which the laser power attains 10% and 90% of the peak power. Also according to section 8.2. of ISO 11554:2017, and related to the variation of radiation power of a laser pulse with time, as is commonly known in the art, the fall time is the time interval between two points of time at which the laser power falls from 90% to 10% of the peak power. Preferably, the laser radiation comprises laser pulses of duration of between 1 ns and 1 ms. In an embodiment the system optionally comprises a mannequin or trouser rack, shaped for mounting on the same an article a clothing that is the textile, and further preferably said mannequin or trouser rack is movable. Such a mannequin or trouser rack exposes well the surface of the textile to be marked, and allows for standardization and automation of the marking process.

In an embodiment the laser radiation is a laser beam and the system comprises an optical system configured for shaping the beam such that latter has a beam spot diameter of from 400 µm to 2000 µm, preferably of from 800 µm to 1500 µm. This way the system can scribe fine detail graphics, with fine i.e. small size, graphic elements. Such elements may be pixels or dots or spots or lines. The beam spot diameter may be the diameter measured at distance of more than 1 m, preferably at 1.9 m, from the laser. This way the system is suitable for marking high quality graphics when the textile is at the aforementioned distances from the laser.

In an embodiment the laser is configured for controllably changing a power or intensity of the laser radiation. This is advantageous for scribing color graphics, particularly grayscale graphics where each graphic element, e.g. each pixel, may be characterized by a value, e.g, a color or pixel value, according to which the laser intensity or energy must be changed so that the contrast and color within the graphic that is marked on the textile varies nicely. Likewise, in an embodiment the graphic comprises graphic elements that are pixels or vectors, and with respect to each of said graphic elements the control information comprises a corresponding graphic element value. Moreover, in an embodiment of the invention the graphic element value is correlated to a color of the graphic element in the graphic. Moreover, in an embodiment the graphic is a grayscale graphic.

In a preferred embodiment the laser (i.e. the fast laser) is a multimode fiber laser. Advantageously multimode lasers are generally less costly compared to alternatives, and also they produce beams of spot sizes that are not very fine (small). Advantageously when the spot size is not very small, a high quality graphic with good contrast characteristics can be scribed without having to use a very high pixel or dot line density; the density may be the number of pixels or dots or lines per area or per unit length. Likewise, in another embodiment the laser radiation is a top hat laser beam. Hat laser beams are usually broader than other types of beams (e.g. Gaussian) and therefore their spot size is not very small. As described above, it may be beneficial not having a beam spot that is excessively small. Likewise, optionally and preferably the laser radiation is a laser beam. Preferably, the fast laser is a fiber laser that comprises a fiber and is configured for the laser radiation be generated in the fiber; preferably said fiber has an inner diameter of 50 micrometers. Preferably the laser's beam quality factor is larger than 4. Advantageously, a 50 micrometer laser generation fiber, may offer a beam of a desired spot size. Optimizing the quality factor further may contribute to optimizing the beam size.

Optionally the power of the laser is of from 50 W to 10000 W; this allows for processing most of the textile materials of high demand in the industry. Likewise, the aforementioned powers are sufficient for marking most graphics of interest at high speeds.

According to all the above, in an alternative embodiment according to the third aspect of the invention, the system comprises:
- a laser configured for producing laser radiation;
- control means configured for modulating the laser radiation and for directing the laser radiation to impinge on the textile material,
the system being characterized in that the laser has a rise time of 35 µs or less, and/or a fall time of 35 µs or less.

Optionally and preferably the laser has a rise time of 25 µs or less, and/or has a fall time of 25 µs of less.

Further preferably, in the system the laser is configured for changing a power or intensity of the laser radiation. Likewise, further preferably, in the system the control means is also configured for controlling, according to the control information, the laser, for thereby controllably changing a power or intensity of the laser radiation.

In said alternative embodiment the control means may include the aforementioned moving means. In said alternative embodiment it is preferable but not necessary that the laser is a fiber laser.

Herein a laser that has a rise time of 35 µs or less, and/or a fall time of 35 µs or less is referred to as a fast laser.

In accordance to the information provided above regarding the method's aspect and optional features, the system of the third aspect of the invention can also have optional features, each being related to the reasoning provided above regarding the corresponding optional feature of the method of the second aspect of the invention. Therefore, the optional features of the method may also be optional features of the system and vice versa. Some of said optional features are described below.

In the system of the third aspect of the invention optionally and preferably, the fast laser is configured to produce laser radiation that comprises pulses, i.e. is pulsed. Also, optionally and preferably, the fiber laser is a q-switched fiber laser or a mode-locked fiber laser.

In the system of the third aspect of the invention the laser radiation may be a laser beam. Likewise, optionally and preferably the systems control means are configured for executing any of: changing the spot size or form of the laser beam, focusing or defocusing the laser beam, scattering the laser radiation, diffracting the laser radiation, deflecting the laser radiation, coupling the laser radiation into an optical fiber, reflecting the laser radiation, passing the laser radiation through free space, passing the laser radiation though an optical filter, and combinations thereof. It is therefore understood that the control means may optionally comprise any of known standard optical components a non-limiting list of which includes optical lenses, mirrors, reflectors, filters, gratings, diffusers, optical fibers, optical fiber couplers, and the like.

In the system of the third aspect of the invention optionally and preferably the control means are configured for changing a power and/or a power density and/or a wavelength of the laser radiation. In an example the control means comprise a controller, that can optionally be in the form of an electronic card connected to and controlled by a computer, and this controller may be connected to the fiber laser and any parts therein and be configured for controlling the operation of the fiber laser. For example, the controller may be configured for switching the laser on and off, for controlling the laser with the purpose of controlling the wavelength of the laser radiation, and/or for controlling whether the laser is CW or pulsed, and in the latter case for optionally controlling any of the laser radiation's pulse width, energy, power, intensity, duty cycle, duration, shape, the period between successive pulses, repetition rate and the like. Likewise, the controller may control different optional electronic components of the fast laser, such as for example, an LED that produces a seed pulse, or produces pump radiation for optically pumping the active gain medium. The controller may optionally control other possible electrooptic or electromechanical or optomechanical components of the control means that may be configured for directing and/or modulating and/or shaping the laser radiation e.g. components that control and modulate outside the fast laser the produced laser beam. Such components may for example comprise galvo-mirrors. The system may comprise one or more controllers. A controller may optionally control more than one components of the control means.

In the system of the third aspect of the invention preferably the laser radiation comprises pulses of radiation, and the control means are configured for any of:
- changing the duration and/or power and/or wavelength of the pulses or parts thereof, and/or
- changing the duration between successive pulses.

In the system of the third aspect of the invention optionally and preferably the fast laser is configured for producing pulsed laser radiation that has a frequency or repetition rate, and the control means are configured for changing said frequency or repetition rate.

The system of the third aspect of the invention optionally and preferably comprise a stage configured for placing on the same the textile. The stage may optionally be movable, and be controlled by a controller. The stage may optionally be movable so that it moves relative to the laser radiation that hits the textile material on the stage. Optionally and preferably the stage is movable so that the textile with respect to the impinging laser radiation is scanned across the X and Y axes of a plane. The stage likewise may optionally be movable across the Z axis.

The system optionally comprises a plotter system that is configured for holding the fast laser's laser head and is configured for moving said laser head across a plane.

In system of the third aspect of the invention optionally and preferably the control means comprise a galvo scanning mirror and/or a polygon scanner, either configured for changing the direction of the laser radiation. More preferably the system comprises at least a pair of galvo scanning mirrors or at least a pair of polygon scanners.

In the system of the third aspect of the invention optionally and preferably marking a graphic on the textile material is marking a pattern on the textile material, the pattern comprising pixels, each pixel having a corresponding area on the surface of the textile material and the control means are configured for any of the following and combinations thereof:
- directing the laser radiation to impinge on (target) at least some, and preferably all, of the corresponding areas for the duration of a corresponding pixel time for each of the corresponding areas impinged (targeted), wherein there are different pixel times for different corresponding areas (therefore, different pixels may have different pixel times associated with them); and/or
- directing the laser radiation to impinge (target) at least some, and preferably all, of the corresponding areas for the duration of a corresponding pixel time for each of the corresponding areas impinged (targeted), and for changing a power or a power density of the laser radiation when or while the laser radiation impinges on (targets) different of said corresponding areas.

In the system of the third aspect of the invention optionally and preferably marking a textile material is marking a pattern on the textile material, the pattern comprising pixels, each pixel being associated with a corresponding marking value, the marking value being any of a whiteness value, a color-scale value, a grayscale value, a binary scale value, a rip value, a laser ON value, a laser OFF value, and the control means are configured for modulating and directing the laser radiation to impinge on (target) the textile material or any part thereof, according to the corresponding marking value.

In the system of the third aspect of the invention optionally and preferably the laser radiation has a wavelength of between 300 nm and 2000 nm, and preferably of between 300 nm to 1100nm, or of between 300 nm and 1000 nm, and most preferably of between 400 and 700 nm, and further most preferably of between 500 nm and 700 nm, or has a wavelength of about 532 nm or of about 1060 nm.

In the system of the third aspect of the invention optionally and preferably the fast laser is configured for producing pulsed laser radiation that comprises laser pulses of duration (i.e. the duration of each pulse) of less than about 10 microseconds, and preferably of less than about 1 microsecond, and most preferably of between 1 ns and 1 microsecond.

In the system of the third aspect of the invention optionally and preferably the textile material is an article of clothing, preferably a pair of denim trousers, and the system further comprises a (artificial) mannequin shaped for mounting on the same the article of clothing, and preferably said mannequin is movable.

In the system of the third aspect of the invention optionally and preferably the laser radiation produced by the laser has an optical power, and the laser for producing the laser radiation consumes electrical power at an electrical to optical power conversion efficiency of more than 20% and preferably of more than 30% and most preferably of 35% or higher.

In the system of the third aspect of the invention the fast laser is a fiber laser that comprises a doped optical fiber as an active gain medium.

In the system of the third aspect of the invention the fast laser is a fiber laser that comprises:
- a first laser source that preferably is a laser diode coupled to a first optical fiber and configured for generating a seed pulse;
- a doped optical fiber that acts as an active gain medium and is coupled to two fiber Bragg gratings and to said first optical fiber;
- a second optical source that is coupled via a second optical fiber to the first optical fiber and/or to the doped optical fiber, and is configured for producing pump radiation for pumping the active gain medium.

The first optical fiber is coupled to one of the fiber Bragg gratings or to the first optical fiber.

In the system of the third aspect of the invention optionally the laser radiation comprises a laser beam and the control means are configured for shaping the beam to have a beam spot diameter of less than 400 microns and preferably of less than 200 microns, and most preferably of less than 160 microns. This optional feature advantageously contributes to solving the problem of how to improve the spatial resolution of the marking/scribing process and thus how to improve the sharpness of the produced pattern or indicia or images marked on the textile.

In the system of the third aspect of the invention optionally and preferably the laser has a laser power of between 10 W and 1000W, or of less than 100 W, and/or the control means are configured for controlling the laser radiation to impinge on the textile material to have a power density of more than 100 W/mm², preferably of more than 400 W/mm².

The invention in a further aspect concerns the use of a laser that has a rise time of 35 µs or less, and/or has a fall time of 35 µs of less, for marking a graphic on a textile.

The invention in a further aspect concerns the use of a laser that has a rise time of 35 µs or less, and/or has a fall time of 35 µs of less, in a system for grayscale marking on a textile.

### Brief Description of Drawings

FIG. 1 is a schematic of an embodiment of a method according to the second aspect of the invention.
FIG. 2 is a schematic of an embodiment of a method according to the second aspect of the invention.
FIG. 3 is a schematic of an embodiment of a method according to the second aspect of the invention.
FIG. 4 is a schematic of an embodiment of a system according to the third aspect of the invention.
FIG. 5. is a schematic of a fiber laser that can be used according to the invention.
FIG. 6 is an image of a denim fabric with a pattern marked using a fast fiber laser according to the invention.
FIG. 7 is an image of a graphic marked on indigo colored denim, using a standard CO₂ laser marking system.
FIG. 8 is an image of a graphic marked on an indigo colored denim, using a fast fiber laser marking system.
FIG. 9 shows an embodiment of a system according to the third aspect of the invention.
FIG. 10 is an image of three patterns marked on the same textile using three different lasers.

### Detailed description of Embodiments of the Invention

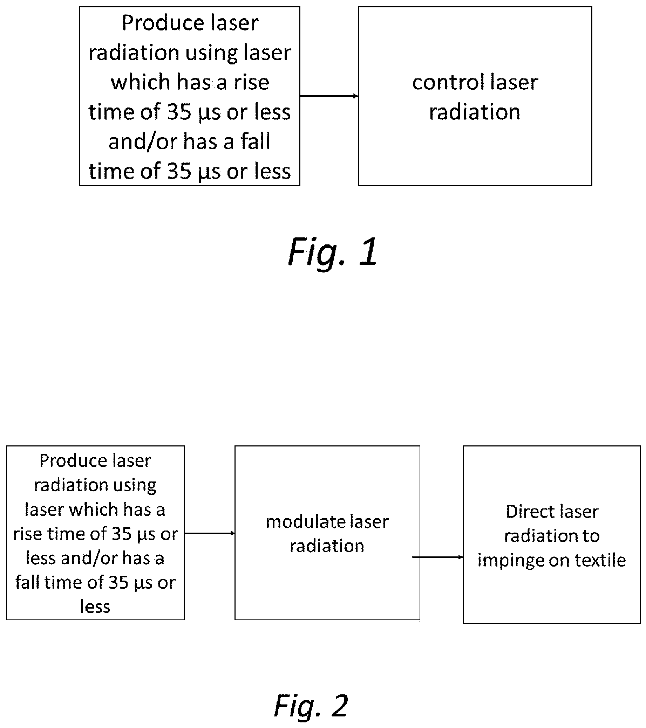

FIG. 1 shows schematically the steps of a preferred embodiment of method of the second aspect of the invention, wherein firstly laser radiation is produced using a fast laser, and said laser radiation is controlled.

FIG. 2 shows schematically the steps of another preferred embodiment of a method according to the second aspect of the invention. Therein, controlling the laser radiation comprises modulating it, e.g. modulating its wavelength or power or pulse power (when said radiation is pulsed laser), and also directing the radiation to target and impinge on the textile fabric.

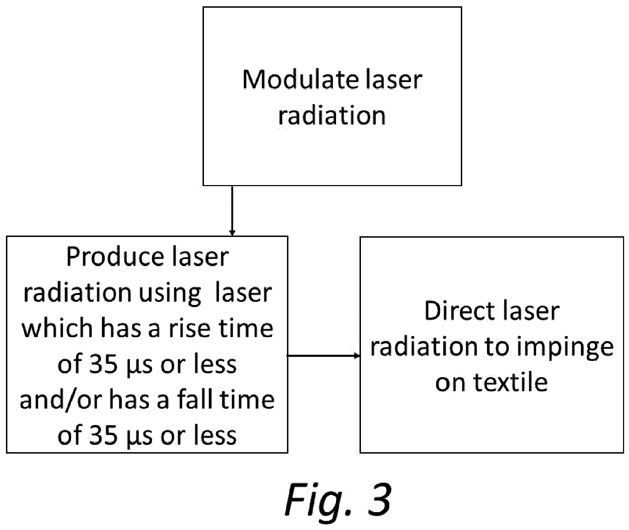

FIG. 3 shows schematically the steps followed in a third embodiment of the method of the invention, said third embodiment being similar to the previous two. In the third embodiment, modulating the laser radiation is done during or as part of directing said radiation towards the textile, for example while the laser beam is (re)directed by mirrors it can be also focused or defocused. In addition, in said third embodiment, modulating is also done as part of generating the laser radiation e.g. by modulating any electro-optical or electromechanical components, such as an LED diode, that is part of the fiber laser, and said component by being modulated causes a change in any of the characteristics of the laser radiation produced by the fiber laser.

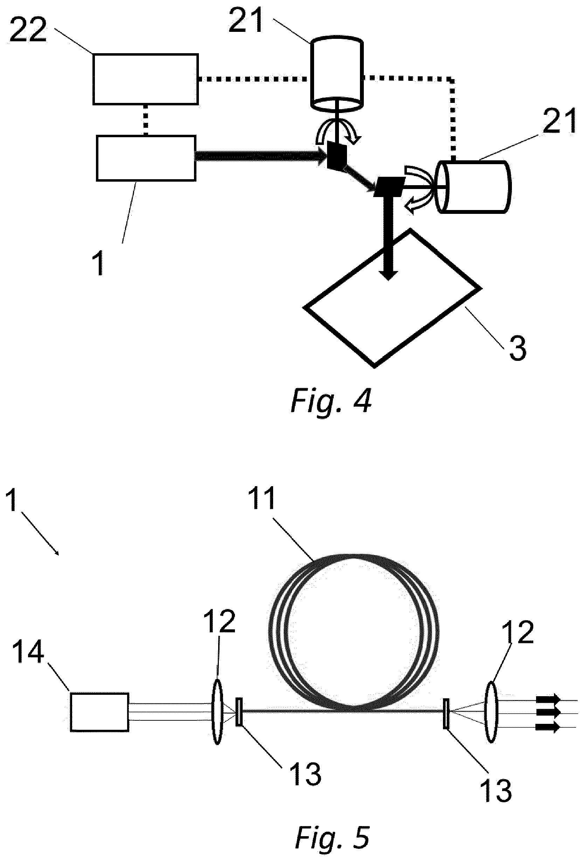

Fig 4 shows another preferred embodiment of the third aspect of the invention, wherein the system comprises a fast laser 1 that in this case is a fiber laser, moving means 21 which in this case comprises a pair of galvo scanning mirrors 21 for directing the laser beam (the path and direction of which is indicated by the thick arrows in Fig 4) to impinge on and scan over the surface of the textile 3. In addition, the system comprises control means which in this case comprises an electronic controller 22 that is connected to (the connections are indicated with dotted lines) and configured to control the fiber laser 1 and the galvo scanning mirrors 21 mentioned above. The controller 22 is controlled by a computer (no shown) in which the user creates or inserts a digital file that contains the image/drawing/pattern/indicia to be marked on the textile, said image/drawing/pattern/indicia comprising pixels, and the archive also contains values associated with each pixel of the image in the archive. Accordingly, the controller controls the laser and/or the galvo-mirros for marking the textile and creating said image on the textile. When for example the drawing to be marked contains pixels of different gray value, then the power of the laser, and/or the time spend by the laser beam on the textile when or during targeting the areas on the textile corresponding to said pixels, may change/vary.

FIG. 5 shows components of the fiber laser 1 that is included in the embodiment of FIG. 4; this particular fiber laser 1 comprises a doped optical fiber 11 that is the active gain medium. The doped fiber 11 on either side is coupled to a corresponding reflector 13, such as for example a fiber Bragg grating, so that an optical resonator is thusly formed. The fiber laser further comprises a laser diode 14 for providing the pump radiation light input, and two lenses 12. The thin lines in FIG. 5 indicate the path and approximate shape form of the light in between different components, and the thick arrows on the right indicate the direction of the laser beam/radiation exiting the fiber laser.

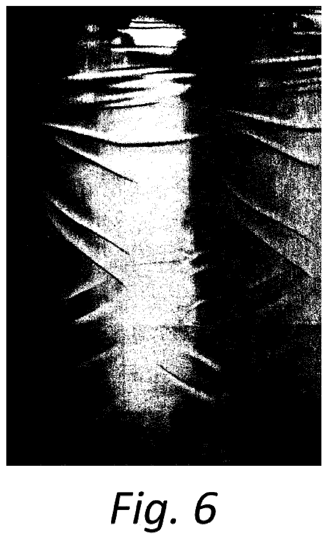

FIG. 6 shows an image of a part of denim trousers marked according to the present invention. A pattern was marked on the surface of a denim fabric. The denim is indigo colored, and the pattern marked on the fabric is whiter compared to the unmarked surface because the laser radiation removed or bleached indigo dyes from the surface of the denim thusly exposing the white core of the cotton yarn of the textile. Different whiteness level within the marked pattern in FIG. 6 were achieved by varying the pixel time i.e. the time spent by the laser beam on the denim as the laser beam was scanning on the surface marking the pattern and the different areas which correspond to the different pixels of the pattern. The pixel time did not exceed 500 µs. The marked pattern corresponds to an image of 39.3701 dots per cm (i.e., 100 dpi (dots per inch)). The pattern was created according to a corresponding digital file stored in a computer. The computer is part of a Twin-Pro laser processing machine by Jeanologia^{®}, which was adapted by replacing the original laser therein with a GLPN-500-1-50-M fiber laser by IPG Photonics^{®}, having a wavelength of 532 nm, pulse energy of 48,4 W at a pulse repetition rate of 300kHz; the fiber laser is used a fast laser according to the invention.

The characteristics of the laser spot typically produced by standard CO₂ lasers typically encountered in the prior art regarding marking textiles, are shown in the following table I. Said standard CO₂ lasers have rise and fall times of more than 35 µs.

**Table I. Properties of spot of beam typically produced by standard CO₂ laser used in textile processing**

| | | | | | | |
|---|---|---|---|---|---|---|
| **Wavelength (µm)** | | 10,60 | | **Truncated Gaussian:†** | | |
| **Laser Power (W)** | | 600,0 | | **Clear Apperture (mm)** | | 22 |
| **Pixel Time (µs)** | | 60,0 | | **Spot Diameter (µm)*** | | 1412 |
| **Beam Diameter (mm)*** | | 20,0 | | **Peak Intensity (kW/cm²)** | | 58,4 |
| **Beam Quality (M²)** | | 1,20 | | **Peak energy density (µJ/cm2)** | | 3,5 |
| **Focal Length (mm)** | | 1700,0 | | | | |
| **Scanning Angle mrad** | | 340 | | | | |
| | | | | **Depth of Focus Trunc (µm)** | | 123181 |
| **Ideal Gaussian:** | | | | **Depth of Focus Ideal (µm)** | | 117013 |
| **Working Area (mm)** | | 1202,7 | | **Expantion Error %** | | 7 % |
| **Spot Diameter (µm)*** | | 1377 | | **Spot expantion ratio** | | 10 % |
| | | | | **Depth of focus (mm)** | | 53,62 |
| **Peak Intensity (kW/cm²)** | | 80,6 | | | | |
| **Peak energy density (µJ/cm2)** | | 4,8 | | Expanded spot (µm)* | | 1514 |
| **Peak Intensity (W/mm²)** | | 806,2 | | | | |
| | | | | | | |
| **Power Density (kW/cm²)** | | 40,3 | | | | |
| **Power energy density (µJ/cm2)** | | 2,4 | | | | |
| **Power Density (W/mm²)** | | 403,1 | | | | |

The characteristics of the laser spot that may be produced in a non-limiting example of a fast fiber laser for textile processing according to the present invention, is shown in table II below:

**Table II. Properties of spot of beam produced by a non-limiting example of a fiber laser for textile processing according to the present invention**

| | | | | | |
|---|---|---|---|---|---|
| **Wavelength (µm)** | | 0,53 | | **Truncated Gaussian:^{†}** | |
| **Laser Power (W)** | | 50,0 | | **Clear Apperture (mm)** | 11 |
| **Pixel Time (µs)** | | 60,0 | | **Spot Diameter (µm)*** | 142 |
| **Beam Diameter (mm)*** | | 10,0 | | **Peak Intensity (kW/cm²)** | 482,8 |
| **Beam Quality (M²)** | | 1,20 | | **Peak energy density (µJ/cm2)** | 29,0 |
| **Focal Length (mm)** | | 1700,0 | | | |
| **Scanning Angle (mrad) (Deg)** | | 340 | | | 46982 |
| | | | | **Depth of Focus Trunc (µm)** | 24729 |
| **Ideal Gaussian:** | | | | **Depth of Focus Ideal (µm)** | 23491 |
| **Working Area (mm)** | | 1202,7 | | **Expantion Error %** | 7 % |
| **Spot Diameter (µm)*** | | 138 | | **Spot expantion ratio** | 10 % |
| | | | | **Depth of focus (mm)** | 10,8 |
| **Peak Intensity (kW/cm²)** | | 666,8 | | | |
| **Peak energy density (µJ/cm2)** | | 40,0 | | **Expanded spot (µm)*** | 152 |
| **Peak Intensity (W/mm²)** | | 6668,2 | | | |
| | | | | | |
| **Power Density (kW/cm²)** | | 333,4 | | | |
| **Power energy density (µJ/cm2)** | | 20,0 | | | |
| **Power Density (W/mm²)** | | 3334,1 | | | |
| | | | | | |

By comparing tables, I and II it can be observed that the spot diameter of the fiber laser can be about 9-10 times smaller compared to the spot diameter of the CO₂ laser. Therefore, with the fiber laser a far superior resolution when marking can be achieved compared to the prior art. Moreover, although the laser power of the fiber laser is about 12 times smaller compared to the laser power of the CO₂ laser, the power density of the produced spot with fiber laser is 9-10 times higher compared to the spot of the CO₂ laser. This indicates that a tremendous increase in the marking speed can be achieved with the present invention.

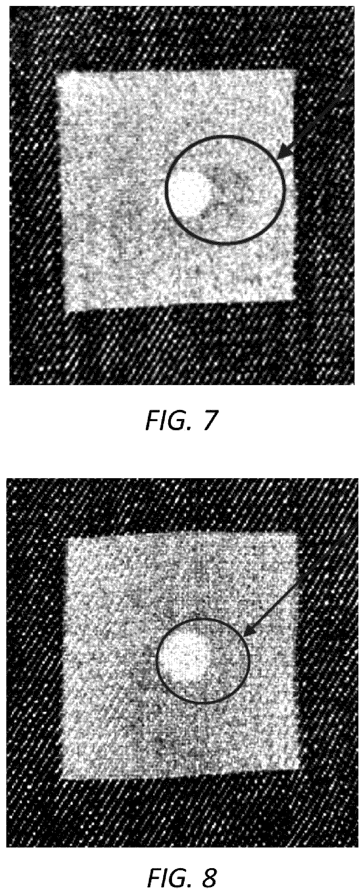

FIG. 7 shows an area of a textile surface wherein a graphic has been marked using a CO₂ laser system that is not a fast laser i.e. has a rise and fall times which are more than 35 µs. The graphic in FIG. 7 comprises a square and a circle within the square; the circle has been marked, according to control information, such that it is more white compared to the square. A "dead zone" artefact, which appears as a shadow, is indicated by the drawn eclipse and arrow in FIG. 7. In the dead zone it appears that the laser beam did not decolor correctly the denim. The inventors believe that this happened because the energy of the laser could not change fast enough between the levels dictated by the control information and the controller, from one pixel to the next one within said dead zone. FIG. 8 shows the same type of graphic marked on a same type of textile as in FIG. 8, but with a fast fiber laser system. There is no dead zone in FIG. 8 thanks to the use of the fiber laser that permits the laser energy to change fast enough from one pixel to the next one.

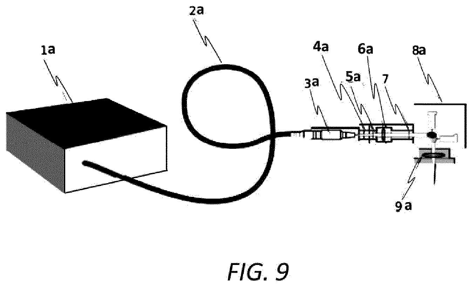

FIG. 9 shows an embodiment of a fast laser system according to the invention; in said embodiment the fast laser is a fiber laser. The following components can be observed in FIG. 9: a fiber laser 1a; fiber optics 2a; a QBH connector 3a; a spatial filter 4a; an entrance protection window 5a; a collimation lens 6a; an output protection window 7a; galvanometric mirrors 8a; an F-theta focusing lens, to focus the beam on the garment 9a. The fiber laser of FIG. 9 may produce high light energies that are generated in optical fiber and propagated through power fiber to the optical marking system. Fiber lasers as the one in FIG. 9 have six main advantages over a classical CO₂ laser system: first, they reach much higher powers; second, they are much more compact; third, their efficiency of converting electrical energy into optical energy, without considering cooling, is much higher; fourth, they are more reliable, and their probability of failure is lower; fifth, they are faster and the rising and falling times of fiber lasers are in general much shorter than those of the CO₂ laser; and sixth, the beam shape of fiber lasers is more regular and more stable which allows to focus the beam more and achieve higher energy densities with the same power.

All the mentioned characteristics of a system as the one shown in FIG. 9 are highly advantageous for the textile industry. The use of a high power fast fiber laser may reduce processing times. The size and weight of a fiber laser may facilitate handling and reduce the size of machinery. The efficiency of a fiber laser may reduce the electricity consumption for every kilowatt of laser light produced. In addition, the consumption of electricity needed to cool equipment is substantially reduced. The corresponding consumption in systems of the prior art often exceeds the electricity consumption of the laser itself. Having fewer components that are easily integrated reduces the number of failures and thus the downtime of the customer's work. Finally, a fast laser such as the fiber laser of the embodiment shown in FIG. 9 advantageously allows to print/mark/scribe images faster and with more fidelity and resolution thanks to its speed and beam stability. The inventors found that often if the rising and falling times become larger than the time to mark a pixel, the print is blurred as the laser takes longer than the pixel time to raise or lower the power; this is what the inventors believe to happen with classic (conventional) CO₂ laser systems.

The fiber laser marking system shown in FIG. 9 comprises a fiber laser 1a that supplies optical energy via optical fiber 2a to in a high-precision QBH connector 3a. The use of the optical fiber in the system of FIG. 9 removes the need of alignment of the laser by an operator during the manufacture of the machine and / or by a technician during a service or maintenance of the machine in the field. The QBH connector in the system of FIG. 9 prevents dust or other contamination from entering the watertight compartment of the optical path through which the laser beam passes. When the light from the connector comes out, its propagation properties and spatial shape are modified by means of a spatial filter 4a. After the modification, the light passes through the protective window 5a and is collimated by the collimating lens 6a. The collimating lens compartment is kept watertight by another protective window 7a. The point of impact of the beam on the garment and its sweep is controlled by a set of galvanometric mirrors 8a. The F-theta lens 9a focuses the beam on the working plane and simultaneously flattens it. The spatial filter assembly, collimating lens, localizing lens, and distance between the two define the size of the focus and the energy density in the working plane. It is preferable to generate a larger focus size to ensure optimal pixel overlap. The system of FIG. 9 also comprises a controller (not shown).

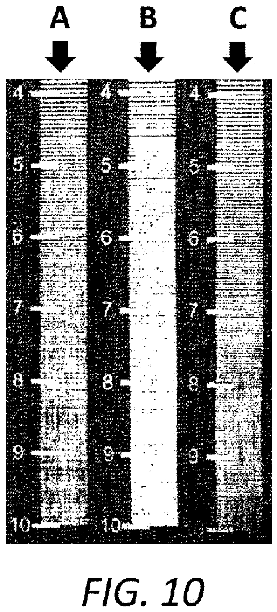

FIG. 10 is an image, in black and white, of three patterns marked on an indigo colored denim fabric using three different lasers. The pattern A which is indicated by the respective arrow in FIG 10 was marked using a standard CO₂ laser of 455 W which has a 60 µs rise/fall time, wherein the laser was marking with a pixel time of 50 µs. The pattern B which is indicated by the respective arrow in FIG 10, was marked using another standard CO₂ laser of 650 W which also has a 60 µs rise/fall time, wherein the laser was marking with a pixel time of 35 µs. The pattern C indicated by the respective arrow in FIG 10, was marked using a CO₂ laser of 650 W which has a 35 µs rise/fall time, wherein the laser was marking with a pixel time of 35 µs. The laser that marked C due to its short rise/fall time is not standard, but instead is fast. For all patterns A-C in FIG 10 the laser sweep direction is from top to bottom from 4 to 10 as indicated by the direction of the arrows, so that the laser progressively marking from 4 to 10 marks white lines which are progressively more and more close together. The white lines comprise white pixels, wherein the space between the lines comprises black pixels. Therefore, going from 4 to 10 the distance between the white lines of the pattern progressively decreases, and the width of the space that comprises the black pixels between the white lines also progressively decreases. As shown in FIG 10, the fast CO₂ laser which was used for marking C allowed to improve the marking quality and reduce the marking time (pixel time). The improved marking quality in C is demonstrated by the fact that the marked lines in C are more clearly distinguishable and well separated between them compared to B and A.

While the foregoing is directed to embodiments of the present invention, other and further embodiments of the invention may be devised without departing from the basic scope thereof. Those skilled in the art will understand that the embodiments disclosed here are non-limitative examples, and other embodiments are possible within the scope or the claims, for example but not limited to, different sequences of the method steps or different combinations of technical features.

## Claims

1. Method of marking a graphic on a textile, the method comprising:
- using a laser for producing a laser radiation, the laser being configured for changing a power or intensity of the laser radiation;
- controllably, according to control information related to a graphic, directing and moving the laser radiation such that the latter impinges on a textile,
- controllably, according to the control information, changing the power or intensity of the laser radiation,
**characterized in that**:
the laser is a fiber laser having a rise time of 35 µs or less, and/or a fall time of 35 µs or less, wherein the rise time, as defined and /or measured according to ISO 11554:2017, is a time interval between two points of time at which the laser power attains 10% and 90% of a peak power, wherein the fall time is a time interval between two points of time at which the laser power falls from 90% to 10% of the peak power the fiber laser comprising:
a first laser source coupled to a first optical fiber and configured for generating a seed pulse;
a doped optical fiber configured as an active gain medium, wherein the doped optical fiber is coupled to two fiber Bragg gratings and to the first optical fiber; and
a second laser source coupled via a second optical fiber to the first optical fiber and/or to the doped optical fiber, wherein the second optical source is configured for producing a pump radiation for pumping the active gain medium;
wherein preferably the method further comprises shaping the laser radiation into a laser beam having a spot diameter of from 400 µm to 2000 µm, preferably of 800 µm to 1500 µm.

2. Method according to claim 1, further comprising changing a speed at which the laser radiation is being moved relative to the textile.

3. Method according to any of the previous claims, wherein the graphic comprises graphic elements that are pixels or vectors, and for each of said graphic elements the control information respectively comprises a corresponding graphic element value.

4. Method according to any of the previous claims, wherein the laser radiation is of a wavelength of between 300 nm to 2000 nm, preferably 400 nm to 800 nm, more preferably 500 nm to 700 nm.

5. Method according to any of the previous claims, wherein the textile is a denim fabric.

6. A system for marking a graphic on a textile (3), comprising:
- a laser (1) for producing a laser radiation, wherein the laser (1) is configured for changing a power or intensity of the laser radiation;
- moving means (21) configured for moving and directing the laser radiation such that the latter impinges on a textile (3),
- control means (22) configured for controlling the moving means (21) according to control information related to a graphic, wherein the control means is also configured for controlling, according to the control information, the laser, for thereby controllably changing the power or intensity of the laser radiation;
**characterized in that:**
the laser (1) is a fiber laser having a rise time of 35 µs or less and/or a fall time of 35 µs or less, wherein the rise time is a time interval between two points of time at which the laser power attains 10% and 90% of a peak power, wherein the fall time is a time interval between two points of time at which the laser power falls from 90% to 10% of the peak power;
the fiber laser comprising:
a first laser source coupled to a first optical fiber and configured for generating a seed pulse;
a doped optical fiber configured as an active gain medium, wherein the doped optical fiber is coupled to two fiber Bragg gratings and to the first optical fiber; and
a second laser source coupled via a second optical fiber to the first optical fiber and/or to the doped optical fiber, wherein the second optical source is configured for producing a pump radiation for pumping the active gain medium;
wherein preferably the method further comprises shaping the laser radiation into a laser beam having a spot diameter of from 400 µm to 2000 µm, preferably of 800 µm to 1500 µm.

7. A system according to claim 6, wherein the laser (1) is a fiber laser, preferably a multimode fiber laser.

8. A system according to any of claims 6-7, wherein the system comprises a mannequin or trouser rack, shaped for mounting on the same an article an clothing that is the textile (3), and further preferably said mannequin or trouser rack is movable.

9. A system according to any of claims 6-8, wherein the graphic comprises graphic elements which preferably are pixels or vectors, and with respect to each of said graphic elements the control information comprises a corresponding graphic element value.

10. A system according to claim 9, wherein the graphic element value is correlated to a color of the graphic element in the graphic, preferably the graphic being a grayscale graphic.

11. A system according to any of claims 6-10, wherein the control means (22) comprise a controller configured to process the control information.

12. A system according to any of claims 6-11, wherein the laser radiation is of a wavelength of between 300 nm to 2000 nm, preferably 400 nm to 800 nm, more preferably 500 nm to 700 nm.

13. A system according to any of claims 6-12, wherein a power of the laser (1) is of from 50 W to 10000 W.

14. The use of a fiber laser that has a rise time of 35 µs or less, and/or has a fall time of 35 µs or less, for marking a graphic on a textile, wherein the rise time is a time interval between two points of time at which the laser power attains 10% and 90% of a peak power, wherein the fall time is a time interval between two points of time at which the laser power falls from 90% to 10% of the peak power;
wherein the fiber laser comprises:
a first laser source coupled to a first optical fiber and configured for generating a seed pulse;
a doped optical fiber configured as an active gain medium, wherein the doped optical fiber is coupled to two fiber Bragg gratings and to the first optical fiber; and
a second laser source coupled via a second optical fiber to the first optical fiber and/or to the doped optical fiber, wherein the second optical source is configured for producing a pump radiation for pumping the active gain medium;
wherein preferably the method further comprises shaping the laser radiation into a laser beam having a spot diameter of from 400 µm to 2000 µm, preferably of 800 µm to 1500 µm.

## Patentansprüche

1. Verfahren zum Markieren einer Grafik auf einer Textilie, wobei das Verfahren Folgendes umfasst:
- Verwenden eines Lasers zum Erzeugen einer Laserstrahlung, wobei der Laser dazu konfiguriert ist, eine Leistung oder Intensität der Laserstrahlung zu ändern;
- Steuerbares Richten und Bewegen der Laserstrahlung, so dass diese auf eine Textilie auftrifft, gemäß Steuerinformationen, die sich auf eine Grafik beziehen,
- Steuerbares Ändern der Leistung oder Intensität der Laserstrahlung in Abhängigkeit von den Steuerinformationen,
**dadurch gekennzeichnet, dass**:
der Laser ein Faserlaser mit einer Anstiegszeit von 35 µs oder weniger und/oder einer Abfallzeit von 35 µs oder weniger ist,
wobei die Anstiegszeit, wie gemäß ISO 11554:2017 definiert und/oder gemessen, ein Zeitintervall zwischen zwei Zeitpunkten ist, zu denen die Laserleistung 10 % und 90 % einer Spitzenleistung erreicht, wobei die Abfallzeit ein Zeitintervall zwischen zwei Zeitpunkten ist, zu denen die Laserleistung von 90 % auf 10 % der Spitzenleistung abfällt, wobei der Faserlaser Folgendes umfasst:
eine erste Laserquelle, die mit einer ersten optischen Faser gekoppelt ist und dazu konfiguriert ist, einen Startimpuls zu generieren;
eine dotierte optische Faser, die als aktives Verstärkungsmedium konfiguriert ist, wobei die dotierte optische Faser mit zwei Faser-Bragg-Gittern und mit der ersten optischen Faser gekoppelt ist; und
eine zweite Laserquelle, die über eine zweite optische Faser mit der ersten optischen Faser und/oder der dotierten optischen Faser gekoppelt ist, wobei die zweite optische Quelle dazu konfiguriert ist, eine Pumpstrahlung zum Pumpen des aktiven Verstärkungsmediums zu erzeugen;
wobei das Verfahren vorzugsweise ferner das Formen der Laserstrahlung zu einem Laserstrahl mit einem Spotdurchmesser von 400 µm bis 2000 µm, vorzugsweise von 800 µm bis 1500 µm, umfasst.

2. Verfahren nach Anspruch 1, ferner umfassend Ändern einer Geschwindigkeit, mit der die Laserstrahlung relativ zu der Textilie bewegt wird.

3. Verfahren nach einem der vorhergehenden Ansprüche, wobei die Grafik grafische Elemente umfasst, die Pixel oder Vektoren sind, und für jedes der grafischen Elemente die Steuerinformationen jeweils einen entsprechenden Wert für das grafische Element umfassen.

4. Verfahren nach einem der vorhergehenden Ansprüche, wobei die Laserstrahlung eine Wellenlänge zwischen 300 nm und 2000 nm, vorzugsweise 400 nm bis 800 nm, noch bevorzugter 500 nm bis 700 nm aufweist.

5. Verfahren nach einem der vorhergehenden Ansprüche, wobei die Textilie ein Denimgewebe ist.

6. System zum Markieren einer Grafik auf einer Textilie (3), umfassend:
- einen Laser (1) zum Erzeugen einer Laserstrahlung, wobei der Laser (1) dazu konfiguriert ist, eine Leistung oder Intensität der Laserstrahlung zu ändern;
- Bewegungsmittel (21), die dazu konfiguriert sind, die Laserstrahlung derart zu bewegen und zu lenken, dass diese auf eine Textilie (3) auftrifft,
- Steuermittel (22), die dazu konfiguriert sind, die Bewegungsmittel (21) gemäß Steuerinformationen zu steuern, die sich auf eine Grafik beziehen, wobei die Steuermittel auch dazu konfiguriert sind, gemäß den Steuerinformationen den Laser zu steuern, um dadurch die Leistung oder Intensität der Laserstrahlung steuerbar zu ändern;
**dadurch gekennzeichnet, dass:**
der Laser (1) ein Faserlaser mit einer Anstiegszeit von 35 µs oder weniger und/oder einer Abfallzeit von 35 µs oder weniger ist, wobei die Anstiegszeit ein Zeitintervall zwischen zwei Zeitpunkten ist, zu denen die Laserleistung 10 % und 90 % einer Spitzenleistung erreicht, wobei die Abfallzeit ein Zeitintervall zwischen zwei Zeitpunkten ist, zu denen die Laserleistung von 90 % auf 10 % der Spitzenleistung abfällt;
wo der Faserlaser Folgendes umfasst:
eine erste Laserquelle, die mit einer ersten optischen Faser gekoppelt ist und dazu konfiguriert ist, einen Startimpuls zu generieren;
eine dotierte optische Faser, die als aktives Verstärkungsmedium konfiguriert ist, wobei die dotierte optische Faser mit zwei Faser-Bragg-Gittern und mit der ersten optischen Faser gekoppelt ist; und
eine zweite Laserquelle, die über eine zweite optische Faser mit der ersten optischen Faser und/oder der dotierten optischen Faser gekoppelt ist, wobei die zweite optische Quelle dazu konfiguriert ist, eine Pumpstrahlung zum Pumpen des aktiven Verstärkungsmediums zu erzeugen;
wobei das Verfahren vorzugsweise ferner das Formen der Laserstrahlung zu einem Laserstrahl mit einem Spotdurchmesser von 400 µm bis 2000 µm, vorzugsweise von 800 µm bis 1500 µm, umfasst.

7. System nach Anspruch 6, wobei der Laser (1) ein Faserlaser, vorzugsweise ein Multimode-Faserlaser, ist.

8. System nach einem der Ansprüche 6-7, wobei das System eine Schaufensterpuppe oder einen Hosenständer umfasst, die bzw. der dazu geformt ist, ein Kleidungsstück, das die Textilie (3) ist, darauf zu montieren, und wobei die Schaufensterpuppe oder der Hosenständer vorzugsweise beweglich ist.

9. System nach einem der Ansprüche 6-8, wobei die Grafik grafische Elemente umfasst, die vorzugsweise Pixel oder Vektoren sind, und wobei die Steuerinformationen in Bezug auf jedes der grafischen Elemente einen entsprechenden Wert für das grafische Element umfassen.

10. System nach Anspruch 9, wobei der Wert für das grafische Element mit einer Farbe des grafischen Elements in der Grafik korreliert ist, wobei die Grafik vorzugsweise eine Graustufengrafik ist.

11. System nach einem der Ansprüche 6-10, wobei die Steuerungsmittel (22) eine Steuerung umfassen, die dazu konfiguriert ist, die Steuerinformationen zu verarbeiten.

12. System nach einem der Ansprüche 6-11, wobei die Laserstrahlung eine Wellenlänge zwischen 300 nm und 2000 nm, vorzugsweise 400 nm und 800 nm, noch bevorzugter 500 nm und 700 nm aufweist.

13. System nach einem der Ansprüche 6-12, wobei die Leistung des Lasers (1) von 50 W bis 10000 W beträgt.

14. Verwendung eines Faserlasers, der eine Anstiegszeit von 35 µs oder weniger aufweist und/oder eine Abfallzeit von 35 µs oder weniger aufweist, zum Markieren einer Grafik auf einer Textilie, wobei die Anstiegszeit ein Zeitintervall zwischen zwei Zeitpunkten ist, an denen die Laserleistung 10 % und 90 % einer Spitzenleistung erreicht, wobei die Abfallzeit ein Zeitintervall zwischen zwei Zeitpunkten ist, an denen die Laserleistung von 90 % auf 10 % der Spitzenleistung fällt;
wobei der Faserlaser Folgendes umfasst:
eine erste Laserquelle, die mit einer ersten optischen Faser gekoppelt ist und dazu konfiguriert ist, einen Startimpuls zu generieren;
eine dotierte optische Faser, die als aktives Verstärkungsmedium konfiguriert ist, wobei die dotierte optische Faser mit zwei Faser-Bragg-Gittern und mit der ersten optischen Faser gekoppelt ist; und
eine zweite Laserquelle, die über eine zweite optische Faser mit der ersten optischen Faser und/oder der dotierten optischen Faser gekoppelt ist, wobei die zweite optische Quelle dazu konfiguriert ist, eine Pumpstrahlung zum Pumpen des aktiven Verstärkungsmediums zu erzeugen;
wobei das Verfahren vorzugsweise ferner das Formen der Laserstrahlung zu einem Laserstrahl mit einem Spotdurchmesser von 400 µm bis 2000 µm, vorzugsweise von 800 µm bis 1500 µm, umfasst.

## Revendications

1. Procédé de marquage d'un graphique sur un textile, le procédé comprenant :
- l'utilisation d'un laser pour produire un rayonnement laser, le laser étant configuré pour modifier une puissance ou une intensité du rayonnement laser ;
- de manière ajustable, selon les informations d'ajustement relatives à un graphique, l'orientation et le déplacement du rayonnement laser de telle sorte que ce dernier touche un textile,
- de manière ajustable, selon les informations d'ajustement, la modification de la puissance ou l'intensité du rayonnement laser,
**caractérisé en ce que** :
le laser est un laser à fibre ayant un temps de montée de 35 µs ou moins, et/ou un temps de descente de 35 µs ou moins,
dans lequel le temps de montée, tel que défini et/ou mesuré selon la norme ISO 11554:2017, est un intervalle de temps entre deux points de temps auxquels la puissance du laser atteint 10 % et 90 % d'une puissance de crête, dans lequel le temps de descente est un intervalle de temps entre deux points de temps auxquels la puissance du laser descend de 90 % à 10 % de la puissance de crête, le laser à fibre comprenant :
une première source laser couplée à une première fibre optique et configurée pour générer une impulsion de départ ;
une fibre optique dopée configurée comme un support de gain actif, dans lequel la fibre optique dopée est couplée à deux réseaux de Bragg en fibres et à la première fibre optique ; et
une seconde source laser couplée par le biais d'une seconde fibre optique à la première fibre optique et/ou à la fibre optique dopée, dans lequel la seconde source optique est configurée pour produire un rayonnement de pompage destiné à pomper le milieu de gain actif ;
dans lequel de préférence le procédé comprend en outre le façonnement du rayonnement laser en un faisceau laser ayant un diamètre de point allant de 400 µm à 2000 µm, de préférence de 800 µm à 1500 µm.

2. Procédé selon la revendication 1, comprenant en outre la modification d'une vitesse à laquelle le rayonnement laser est déplacé par rapport au textile.

3. Procédé selon l'une quelconque des revendications précédentes, dans lequel le graphique comprend des éléments graphiques qui sont des pixels ou des vecteurs, et pour chacun desdits éléments graphiques les informations d'ajustement comprennent respectivement une valeur d'élément graphique correspondante.

4. Procédé selon l'une quelconque des revendications précédentes, dans lequel le rayonnement laser a une longueur d'onde de 300 nm à 2000 nm, de préférence de 400 nm à 800 nm, plus préférablement de 500 nm à 700 nm.

5. Procédé selon l'une quelconque des revendications précédentes, dans lequel le textile est un tissu en jean.

6. Système de marquage d'un graphique sur un textile (3), comprenant :
- un laser (1) pour produire un rayonnement laser, dans lequel le laser (1) est configuré pour modifier une puissance ou une intensité du rayonnement laser ;
- un moyen de déplacement (21) configuré pour déplacer et orienter le rayonnement laser de telle sorte que ce dernier touche un textile (3),
- un moyen d'ajustement (22) configuré pour ajuster le moyen de déplacement (21) selon les informations d'ajustement relatives à un graphique, dans lequel le moyen d'ajustement est également configuré pour ajuster, selon les informations d'ajustement, le laser, pour ainsi modifier de manière ajustée la puissance ou l'intensité du rayonnement laser ;
**caractérisé en ce que :**
le laser (1) est un laser à fibre ayant un temps de montée de 35 µs ou moins, et/ou un temps de descente de 35 µs ou moins, dans lequel le temps de montée est un intervalle de temps entre deux points de temps auxquels la puissance du laser atteint 10 % et 90 % d'une puissance de crête, dans lequel le temps de descente est un intervalle de temps entre deux points de temps auxquels la puissance du laser descente de 90 % à 10 % de la puissance de crête ;
le laser à fibre comprenant :
une première source laser couplée à une première fibre optique et configurée pour générer une impulsion de départ ;
une fibre optique dopée configurée comme un support de gain actif, dans lequel la fibre optique dopée est couplée à deux réseaux de Bragg en fibres et à la première fibre optique ; et
une seconde source laser couplée par le biais d'une seconde fibre optique à la première fibre optique et/ou à la fibre optique dopée, dans lequel la seconde source optique est configurée pour produire un rayonnement de pompage destiné à pomper le milieu de gain actif ;
dans lequel de préférence le procédé comprend en outre le façonnement du rayonnement laser en un faisceau laser ayant un diamètre de point allant de 400 µm à 2000 µm, de préférence de 800 µm à 1500 µm.

7. Système selon la revendication 6, dans lequel le laser (1) est un laser à fibre, de préférence un laser à fibre multimode.

8. Système selon l'une quelconque des revendications 6 à 7, dans lequel le système comprend un mannequin ou un porte-pantalon, façonné pour que soit monté sur celui-ci un article vestimentaire qui est le textile (3), et de préférence encore ledit mannequin ou porte-pantalon est mobile.

9. Système selon l'une quelconque des revendications 6 à 8, dans lequel le graphique comprend des éléments graphiques qui sont de préférence des pixels ou des vecteurs et, en ce qui concerne chacun desdits éléments graphiques les informations d'ajustement comprennent une valeur d'élément graphique correspondante.

10. Système selon la revendication 9, dans lequel la valeur d'élément graphique est corrélée à une couleur de l'élément graphique dans le graphique, de préférence le graphique étant un graphique en niveaux de gris.

11. Système selon l'une quelconque des revendications 6 à 10, dans lequel le moyen d'ajustement (22) comprend un contrôleur configuré pour traiter les informations d'ajustement.

12. Système selon l'une quelconque des revendications 6 à 11, dans lequel le rayonnement laser a une longueur d'onde de 300 nm à 2000 nm, de préférence de 400 nm à 800 nm, plus préférablement de 500 nm à 700 nm.

13. Système selon l'une quelconque des revendications 6 à 12, dans lequel une puissance du laser (1) est de 50 W à 10000 W.

14. Utilisation d'un laser à fibre qui a un temps de montée de 35 µs ou moins, et/ou a un temps de descente de 35 µs ou moins, pour le marquage d'un graphique sur un textile, dans lequel le temps de montée est un intervalle de temps entre deux points de temps auxquels la puissance du laser atteint 10 % et 90 % d'une puissance de crête, dans lequel le temps de descente est un intervalle de temps entre deux points de temps auxquels la puissance du laser descente de 90 % à 10 % de la puissance de crête ;
dans lequel le laser à fibre comprend :
une première source laser couplée à une première fibre optique et configurée pour générer une impulsion de départ ;
une fibre optique dopée configurée comme un support de gain actif, dans lequel la fibre optique dopée est couplée à deux réseaux de Bragg en fibres et à la première fibre optique ; et
une seconde source laser couplée par le biais d'une seconde fibre optique à la première fibre optique et/ou à la fibre optique dopée, dans lequel la seconde source optique est configurée pour produire un rayonnement de pompage destiné à pomper le milieu de gain actif ;
dans lequel de préférence le procédé comprend en outre le façonnement du rayonnement laser en un faisceau laser ayant un diamètre de point allant de 400 µm à 2000 µm, de préférence de 800 µm à 1500 µm.
